# EUROPEAN PATENT SPECIFICATION

(11) **EP 3 406 091 B1**
(45) Date of publication and mention of the grant of the patent: **23.10.2019**
(21) Application number: 17700016.3
(22) Date of filing: 02.01.2017
(51) Int. Cl.: H04W 8/18, H04W 84/18, H04L 12/24

(54) **CONFIGURATION SYSTEM FOR A SET OF WIRELESS NETWORK DEVICES.**
KONFIGURATIONSSYSTEM FÜR EINEN SATZ DRAHTLOSER NETZWERKVORRICHTUNGEN
SYSTÈME DE CONFIGURATION POUR UN ENSEMBLE DE DISPOSITIFS DE RÉSEAU SANS FIL

(30) Priority: 21.01.2016 EP 16152154
(43) Date of publication of application: 28.11.2018
(73) Proprietor: Signify Holding B.V., 5656 AE Eindhoven (NL)
(72) Inventor: DEIXLER, Peter, 5656 AE Eindhoven (NL); FRIMOUT, Emmanuel, David, Lucas, Michael, 5656 AE Eindhoven (NL); ROZENDAAL, Leendert, Teunis, 5656 AE Eindhoven (NL)
(74) Representative: Takken, Robert
(86) International application number: PCT/EP2017/050021
(87) International publication number: WO 2017/125255

(56) References cited:
- EP-A1- 2 503 854
- WO-A1-2007/102097
- WO-A2-2009/101592
- US-A1- 2005 113 123
- US-A1- 2010 208 662
- US-A1- 2015 008 828

## Description

### FIELD OF THE INVENTION

The invention relates to a configuration system arranged to configure a first set of wireless network devices to form a first stand-alone wireless network, a configuration device, a configuration manager, a configuration method, a computer program, and a computer readable medium.

### BACKGROUND

The development of solid state lighting devices such LED luminaires, have enabled much more lighting control. For example, the control of the solid state lighting device may be enforced from a central device connected to the solid state lighting device. This connection can be made using a wired or a wireless channel.

Centrally controlled lighting systems enable a wide variety of control functionalities and can be applied both in office and home applications. Especially, lighting systems that are configured as wireless networks are convenient in installation, maintenance and for the flexibility they offer.

Present wireless networks for lighting control come in two types: stand-alone wireless network and connected wireless network. A stand-alone wireless network does not include a gateway (also referred to as a bridge) which allows communication between the stand-alone wireless network and other external networks or computers. A connected wireless network does include such a gateway.

Wirelessly controlled lighting systems enable a wide variety of control functionalities and can be applied both in office and home applications. Already the stand-alone type of wireless network provides many benefits.

For example, a ZigBee mesh network may easily be configured as a stand-alone wireless network. The network may include controllers, such as wall switches, luminaires, occupancy sensors, daylight sensors and the like. Such a stand-alone wireless network may be installed for each area of a building in which that is desired; so that, say, in an office building many of such stand-alone wireless networks may be configured.

The amount of control of the luminaire can differ per system. Systems can control only the operational state (on or off) of a luminaire or can control the dimming levels of a luminaire or can even control the color emitted by the luminaire.

Nevertheless, some applications require a connected wireless network. For example, features such as a central override, e.g., to turn off some or all lights, say at night, may be implemented by sending an override message to all connected networks, say from a central computer such as a building management system (BMS).

To upgrade multiple wireless stand-alone networks into a connected system, often network merge problems occur. For instance, implementing a central override on top of the standalone controls islands is not possible in a straight forward fashion as the different stand-alone networks may use different or conflicting wireless channels.

Reference is made to International Patent application PCT/IB2007/050603 published as WO2007/102097 A1 with title "Lighting system with lighting units using optical communication".

### SUMMARY OF THE INVENTION

The objectives of the present invention are achieved through the subject-matter of the independent claims 1, 11, 12 , 13, 16 and 17, respectively claiming a configuration system (claim 1), a portable configuration device (claim 11), a configuration manager (claim 12), a configuration method (claim 13), a computer program (claim 16) and a computer readable medium comprising the computer program (claim 17). Preferred embodiments are set out in the dependent claims.

The portable configuration device configures the devices of the first set into a stand-alone network. Through the configuration manager configuration parameters are chosen which are compatible with a future connected network in which the first and second stand-alone networks are merged. Conventional systems, do not select parameters for future compatibility. On the contrary, often a default ZigBee installation will select a radio frequency channel which differs from adjacent networks as much as possible. Merging two networks which are on a different channel, is difficult, as a straggling device which fails make the switch from a previous channel to a new channel (e.g. a standing lamp which was unplugged at the time of the channel switch) may as a result become unreachable in both the new merged network or in its previous-now largely disappeared-unmerged network. By selecting parameters that are already compatible a future upgrade of stand-alone networks to connected networks becomes easier. The configuration parameters include radio frequency information configuring a frequency on which a second stand-alone wireless network operates, e.g., receives, and transmits. Other merge problems may occur with other network parameters such a network addresses, group identifiers, etc. For example, in an embodiment the configuration manager is arranged to associate a group identification to a group of the first set so that no group identification associated to a group of the first set is the same as a group identification associated with a network device of the second set.

The portable configuration device, configuration manager and configuration storage are electronic devices. The portable configuration device may be a mobile electronic device, e.g., a mobile phone. For example, the wireless devices may be ZigBeeTM transceivers, WiFi transceivers, Bluetooth, LoRA, Sigfox and 6LoWPAN transceivers. The portable configuration device may be a smart phones or tablet with app arranged to configure the smart phone as configuration device. The portable configuration device may also be a dedicated configuration device.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc..

The computer program may be made available for downloading. This aspect is used when the computer program is uploaded into, e.g., Apple's App Store, Google's Play Store, or Microsoft's Windows Store, and when the computer program is available for downloading from such a store.

### BRIEF DESCRIPTION OF THE DRAWINGS

Further details, aspects and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Figure 1 schematically shows an example of an embodiment of a configuration system together with wireless network devices,
Figure 2a schematically shows an example of a configuration method,
Figure 2b schematically shows an example of a configuration method,
Figure 3a schematically shows a computer readable medium having a writable part comprising a computer program according to an embodiment,
Figure 3b schematically shows a representation of a processor system according to an embodiment.
Figure 4 schematically shows an example of an embodiment of an office plan.

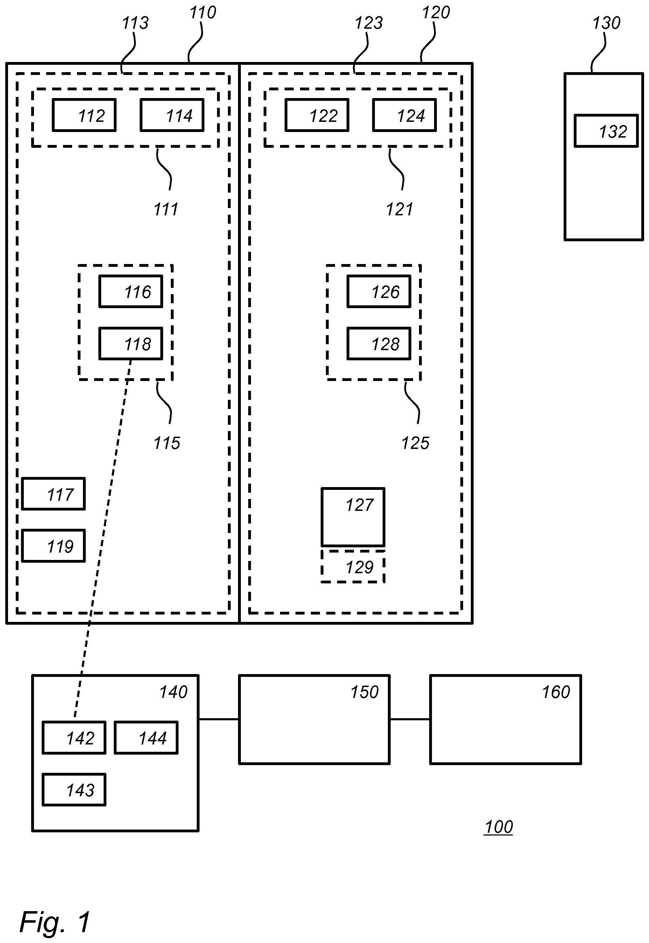

### List of Reference Numerals in figure 1

- 100: a configuration system
- 110: a first room
- 111, 115: a group
- 112, 114, 116, 118: a luminaire
- 113: a first set
- 117: a wall sensor
- 119: an occupancy sensor
- 120: a second room
- 121, 125: a group
- 122, 124, 126, 128: a luminaire
- 123: a second set
- 127: a Wi-Fi access point
- 129: a likely gateway device location
- 130: a third room
- 132: a wireless network device
- 140: a configuration device
- 142: a first network interface
- 143: a location unit
- 144: a second network interface
- 150: a configuration manager
- 160: a configuration information storage

### DETAILED DESCRIPTION OF PREFERRED EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Further, the invention is not limited to the embodiments, and the invention lies in each and every novel feature or combination of features described above or recited in mutually different dependent claims.

**Figure 1** schematically shows an example of an embodiment of a configuration system 100. Figure 1 also shows a schematic map of three office rooms 110, 120 and 130. Below embodiments will be explained with reference to an application to lighting control in buildings, in particular office buildings; however, other embodiments may be similarly applied to configuration of wireless network devices in other situations. For example, instead of offices embodiments may also be applied to hospitals, private buildings, museums, parking lots, streetlighting controls etc. For example, embodiments may be applied to other wireless network devices, e.g., sensors, such as temperature or humidity sensors, and other devices, e.g., heating, ventilation, and cooling devices, etc. For example, an embodiment may be applied in a home/office automation project.

Figure 1 shows a first set 113 of wireless network devices 112, 114, 116, 118, and 117 and 119 in room 110. For example, wireless network device 117 may be a wall switch; wireless network device 119 may be an occupancy sensor. Figure 1 further shows a second set 123 of wireless network devices 122, 124, 126, and 128 in room 120. References 127 and 129 are not part of second set 123. For example, wireless network devices 112, 114, 116, 118 and 122, 124, 126, 128 and 132 may be luminaires, for example, they may be LED luminaires. The first and second set may include further wireless network devices not shown. The configuration shown in figure 1 is exemplifying. In an embodiment more or fewer wireless network devices may be used. The wireless devices may be devices such as luminaires, switches, controllers, sensors, dimmers, and the like; however, other types of wireless network devices may also be used.

Second set 123 has previously been configured to form a second stand-alone wireless network. A stand-alone wireless network does not include a gateway. The devices on the stand-alone wireless network, e.g., luminaires 122-128 cannot be controlled from a computer which is not part of the second wireless network. Figure 1 shows a Wi-Fi access point 127 in room 120. This Wi-Fi access point is not part of the first or second stand alone network.

For example, the second network may be a mesh network, e.g., a ZigBee network. For example, the wireless network devices of second set 123 may be controlled through the second network. For example, second set 123 may include one or more wall switches or dimmers to control luminaries. For example, second set 123 may include one or more occupancy sensors to control luminaires. In an embodiment, second set 123 may include one or more temperature sensors to control or monitor heating or cooling equipment, possibly with or without luminaires and other lighting control, etc.

The wireless network devices in second set 123 have each been configured to be part of the same second stand-alone wireless network by receiving configuration parameters, e.g., network information. In an embodiment, the first and second configuration parameters are network parameters. The configuration parameters may include radio frequency information configuring a frequency on which a second stand-alone wireless network transmits a network address for addressing individual wireless network devices, and/or a network identifier. For example, relevant ZigBee configuration parameters may include a channel, a Personal Area Network Identifier (PAN ID), and a network address. In the case of ZigBee, additional parameters may include security keys and group identifiers. In the case of ZigBee all devices on the second wireless network may be configured for the same channel, and the same PAN Id, but each will receive a different network address.

Merging of two stand-alone wireless networks may be done by merging both networks in a new, larger stand-alone wireless network. Preferably, however, the two stand-alone wireless networks may be merged into a single connected wireless network, i.e., a wireless network that includes a gateway. The first and second stand alone wireless network comprise multiple wireless network device but may optionally also include one or more legacy devices, e.g., daylight or occupancy sensors, connected through wire, e.g., to a wireless network device of the set. Alternatively, a portion of the network may be implemented wirelessly (e.g. wireless occupancy sensor, wireless wall switches), while another portion of the network may be implemented in wired fashion (e.g. track-heads on a retail lighting track; or wired connection of downlights in a meeting room).

The ZigBee network may be, e.g., according to the ZigBee 2004 Specification (IEEE 802.15.4-2003 ZigBee), the ZigBee 2006 Specification, or the 2007 specification (ZigBee Pro), etc.

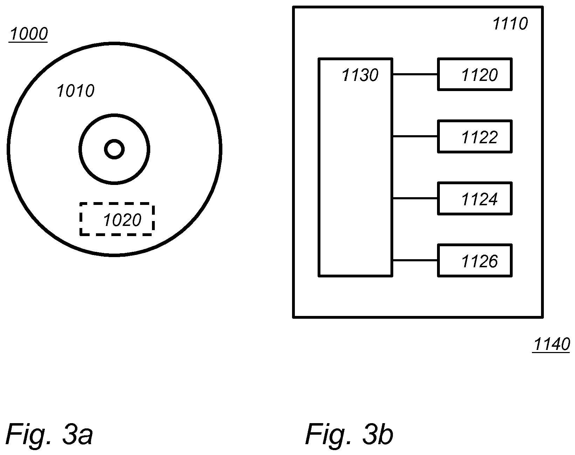

In figure 1, first set 113 is located in a first room 110 and second set 123 in a second room 120. As shown, first room 110 and second room 120 are adjacent. This is only an example, the first and second set may be distributed over a larger area, say multiple rooms. First and second room may but need not be adjacent. Also shown in figure 3 is a third room 130 with further wireless network devices, of which only wireless network device 132 is shown. Also the further wireless network devices have previously been configured into a third stand-alone wireless network. Third room 130 is located further away from room 110 than room 120, and in this case also separated, e.g., by a corridor. In this example, the first and second network are well placed for a future merger; for example, if rooms 110 and room 120 are merged into a larger meeting room. We will assume that the third network of room 130 is less well placed for a merger. In an embodiment though, an entire floor of a smaller office building may be well placed for merger and joined to a single gateway in future. Other floors of the building may be placed on a different gateway.

Also the devices in first set 113 are to be configured as a stand-alone wireless connected network. This task may be performed by a configuration device 140. Configuration device 140 comprises a first network interface 142 for wirelessly connecting to the wireless network devices of the first set. For example, first network interface 142 may be a ZigBee communication unit arranged to communicate using the ZigBee protocol. During configuration of the first network, configuration device 140 may be part of the first network, e.g., operating as a coordinator; when the configuration (also referred to as commissioning) is complete, configuration device 140 may be removed from the network. For example, configuration device 140 may use a known method for communicating with the first set, e.g., using the "Philips SpaceWise" or Philips Actilume or Philips hue system.

Also in a conventional ZigBee installation, the devices in first set 113 may be configured into a first stand-alone wireless network. The only regard given to the existing second network is to select lightly used channel. If first set 113 and second set 123 are located close to each other, as shown in figure 1, this will most likely result in first and second network using a different channel. If in future the first and second network will be merged this may cause conflicts. For example, consider the situation in which a message is sent over the first wireless network instructing the devices to switch to the channel of the second network. If for some reasons such a message does not reach some particular device of the first set, then that device will remain on the old channel. For example, some devices may be temporarily turned off, or the message may by accident fail to reach all devices. This may have the unfortunate consequence that the particular device is permanently out of communication. Even resending said switching message after the wayward device has been turned on may not work if a mesh network like ZigBee is used. In a mesh network communication is dependent on the intermediate devices. As these devices have switched to the new channel, the message may fail to reach the particular device.

It is noted that the standard feature of ZigBee to avoid channels used by nearby ZigBee networks exacerbates this problem. Because of this the networks that are close to each other and are thus more likely to be merged in future, are on different channels and may thus suffer the above problem.

Configuration system 100 further comprises configuration information storage 160 and a configuration manager 150. Configuration information storage 160 stores second configuration parameters of the second set 123 of wireless network devices (122, 124, 126, 128) as it was previously configured to form a second stand-alone wireless network.

For example, configuration information storage 160 may be a cloud storage. Configuration information storage 160 may also be part of configuration manager 150, etc. Configuration information storage 160 may comprise a memory, say an electronic memory.

Configuration device 140 may be arranged to select a wireless network device of first set 113 to start a new stand-alone network, or to add to the new stand-alone network as it is being configured. Configuration device 140 comprises a second network interface 144 arranged to communicate to configuration manager 150. Configuration device 140 communicates to configuration manager 150 that a new device is to be configured for a new first stand-alone wireless network. In figure 1, configuration device 140 is shown to communicate with wireless network device 118 to start a new stand-alone wireless network. Configuration 140 communicates to configuration manager 150 that a new wireless network is to be started with wireless network device 118. First and second interfaces 142 and 144 may use different communication protocols, e.g., ZigBee versus Wi-Fi. Interface 144 may use, e.g., Wi-Fi, 4G, 3G, NarrowBand IoT, LoRa, Bluetooth etc.

For example, portable configuration device 140 may transmit a configuration request for the first set of wireless network devices. Through the request the configuration manager is informed that a new stand-alone wireless network is being configured. The configuration request may include additional information such as an indication of the location of the first set, or of a device of the first set, room type, and the like. Configuration device 140 may send the configuration request before or after it contacted a device of the first set. For example, a user may enter information on the configuration device, e.g., location information, e.g., a room number, and/or other information, e.g., a room type (say private office, or plan office; private offices are more likely to get merged during reconfiguration than large open plan offices), e.g. the number of devices.

In an embodiment, the devices of the first set may be passive until they are triggered, say by a light pulse, of configuration device 140. On the other hand the devices of the first set may have configured themselves into an ad-hoc provisional network. The devices of the first set may be communicated with through the provisional network. In the latter case, some information of the first set may be obtained through the provisional network, e.g., the number of devices. The provisional network may also be used by the configuration device to distribute the first configuration parameters to the first set of wireless devices.

The configuration device may receive configuration parameters from the configuration manager. In an embodiment, the configuration device is arranged to initiate configuration of the first set of wireless network devices according to the first configuration parameters. For example, the configuration device may transfer the first configuration parameters to the first set of wireless network devices to form the first stand-alone wireless network.

Upon receiving that a new stand-alone wireless network is to be configured from configuration device 140, configuration manager 150 determines if there is an existing stand-alone wireless network that is placed so that it may be merged with the first wireless network that is currently being configured. For example, configuration manager 150 may determine that the first set of wireless network devices and the second set of wireless network devices are placed so that they may be connected to a same gateway device 129 forming a future connected wireless network. Note that gateway device 129 is not actually present in room 120; reference 129 only represents a likely placement for a future gateway. However, as rooms 110 and 120 are close to each other it is foreseeable that in a possible upgrade to a connected network the two rooms will be connected to the same gateway. Alternatively, in an office restructuring, the two rooms may be joined to form a single larger room for which it may be desirable to have a single network. Although in that case the first and second stand-alone networks need not necessarily be connected to a gateway, the same consideration apply for merging to a single stand-alone network as do to merging into a single connected network.

Configuration manager 150 is further arranged to determine first configuration parameters for the first set of wireless network devices for forming the first set into a first stand-alone wireless network, wherein the first and second configuration parameters are compatible with the future connected wireless network. Configuration manager 150 may transmit the first configuration parameters to configuration device 140, e.g., over second interface 144. Configuration device 140 may then use the first configuration parameters to configure the devices of first set 118; In the situation shown, device 118 may transfer the first configuration parameters to the first set of wireless network devices forming the first stand-alone wireless network. Configuration manager 150 may transmit the first configuration parameters by signaling that the same parameters of the previous configuration, e.g., channel number, may be used again. In some embodiment, a series of stand-alone wireless networks will be configured with the some or all the same parameters of the previous configuration, e.g., channel number; by signaling only that the previous configuration parameters (or a subset thereof) are to be used again wireless traffic is reduced.

Configuration device 140 may connect to configuration manager 150 immediately after contacting a first device, e.g. device 118. Configuration device 140 may also connect to configuration manager 150 before connecting to device 118, e.g., after a user indicates to configuration device 140 that he is starting a new stand-alone network. In an embodiment configuration device 140 may also first connect to more than one of the devices of the first set, perhaps to each one of them. Configuration device 140 may be configured to transmit information regarding the device contacted by configuration device 140, e.g., their number, but possibly also their type (luminaire, or wall switch, etc).

The latter has the advantage that configuration manager knows more information about the second stand-alone network before deciding upon configuration parameters. In particular, configuration device 140 may send configuration manager 150 the number of wireless device which are to be part of the first stand-alone wireless network.

For example, in an embodiment the first configuration parameters may include radio frequency information configuring a frequency on which a second stand-alone wireless network transmits, the first and second configuration parameter being selected so that the first and second stand-alone wireless network operate on a same radio frequency.

For example, in an embodiment the first configuration parameters may include radio frequency information configuring a modulation method through which a second stand-alone wireless network transmits, the first and second configuration parameter being selected so that the first and second stand-alone wireless network use the same modulation method. For instance, WiFi has different modulation methods operation on the same frequency 802.11b vs .11n vs 11g.

For example, configuration manager 150 may identify from the stand-alone networks listed in configuration storage 160 that the existing second network is a likely candidate which in future may be merged with the first network. From configuration storage 160, configuration manager 150 obtains the radio frequency information configuring a frequency on which a second stand-alone wireless network transmits. Configuration manager 150 may forward the radio frequency information in the first parameters to configuration manger 140. Configuration manager 140 may then configure the devices in the first set to transmit using the same frequency(ies) on which a second stand-alone wireless network transmits. In this way the problem of network conflicts given above is avoided. If in future the first and second network is to be merged, merging messages may be send on the same frequency and still be received by all devices. Even if a device fails to receive a reconfiguration message, it will remain in communication using the same frequencies.

The configuration parameters for the first and second wireless network preferably have the same frequency information, e.g., the same channel, on which data is the exchanged. The configuration parameters may have a different network identifier, e.g. PAN. This means that the first and second networks are strictly separate networks. As with a command to change channels, if the first and second wireless networks are not on the same PAN, it may happen that some straggling device has not received a command to change PAN. This will initially lead to the same problem. The straggling device will stay on the old PAN while the rest of the first and second network switched to the new PAN. The straggling device has then become unreachable through normal networking. However, as the straggling device is on the correct channel, the situation may be rectified much more easily, in particular without intervention of personal, by sending new messages on the same channel. For example, a so-called ZigBee inter-pan message may be used.

Especially for battery operated devices, such as wall-switches and battery operated sensors, this risk is large. Such device are most of the time in deep sleep, and thus unreachable; those devices hence can easily miss a command to switch to new channel or PAN ID; in the present state of the art, merging of rooms is very cumbersome whenever a battery operated device is present. In an embodiment, the wireless devices of the first and/or second set include one or more battery operated devices.

The situation above may be fully avoided if the first and second configuration parameter being selected so that the first and second stand-alone wireless networks have the same network identifier. In that case the configuration manager assigns network addresses to devices of the first set, so that no network address associated to a device of the first set is the same as a network address assigned to a network device of the second set. Note that the devices in the first and second set respectively have no knowledge of each other until they are merged.

In an embodiment configuration device 140 comprises a detector configured to detect wireless network device, e.g., in the first and/or second set, a transmitter configured to transmit messages to the wireless network devices; a communicator configured to communicate with a network, wherein the communicator is configured to receive and retrieve data from the network and transmit data to the network; a memory configured to store data; a user interface configured to interface with a user; a processor coupled to the detector to receive data on the detected wireless network devices, coupled to the communicator to communicate with the network, coupled to the memory to get access to data stored in the memory, coupled to the user interface to process the received user information and coupled to the transmitter to control the transmitter, wherein the processor is configured to execute a method according to an embodiment. The configuration manager may be reached over said network.

In embodiment, alignment with an existing stand-alone network may be provided in the background during the commissioning of an adjacent network, with the aim of preparing for a smoother wireless network merge later. The networked installer commissioning tool may appear to the installer to still be the simple fully standalone commissioning tool he/she is already acquainted to from installing basic standalone wireless lighting systems. However, in reality the installer remote is also taking into account what has already happened or may be happening on other spaces within the building, e.g., adjacent rooms, other rooms on the floor, other floors.

Applications include, e.g., the optional upgrade of several stand-alone system islands toward central override control features such as: automatic demand response, central timers to shut off for the lighting during night hours, central override by the facility manager (e.g. cleaning mode, say, with lights fully on so that dirt is visible to the cleaning staff). In addition to central overrides, an optional upgrade of several stand-alone system islands may also enable central data logging. Central data logging will require higher network bandwidth compared to ADR and central timers features. For example, usage data may be collected, say power consumption of luminaire or data on sensor triggering events.

Another desirable feature for future proofing is the upgrade of bridge-less standalone wireless control system towards a facility-wide conference room management system, which is leveraging the room occupancy information locally obtained from the lighting systems and is integrated with the room's agenda, e.g., in Microsoft Outlook. Installing conference room management typically requires the network merge of adjacent stand-alone islands of several conference rooms, each having a stand-alone network of say 3-6 office luminaires, one sensor, and one wireless wall switch. One single bridge with cloud connection may then be added for a row of several meeting rooms.

Merging of adjacent control networks regularly occurs during office remodeling e.g. if a separation wall gets removed between two adjacent private offices to create a conference meeting room or new executive office. Facility managers appreciate the possibility to merge-in a straight forward fashion-adjacent stand-alone island networks into a single network. Hence, the luminaires originally located in a private office can be added in a simple fashion to an existing large open plan office controls without the need to re-do all the grouping from scratch. One of the common problems for room mergers is that the wall-switches of adjacent rooms happen to share the same group ID. This leads to switching events of one room disturbing the adjacent rooms after the networks have been merged. For example, the short ZigBee 16-bit group and/or network addresses may sometimes conflict (see further below).

Even if a complete fully connected wireless lighting solution is installed from scratch, say for a building renovation project, the installation may still be performed in a two-step approach:
A first workflow for installing basic stand-alone networks is performed, and
A second workflow, say a few days/weeks later, is performed by a commissioning expert who adds the gateways and merging the stand-alone networks.

An advantage of this approach is that the commissioning expert is not required for phase 1).

For phased commissioning it is desired to have as many as possible rooms from the start connected to the same network; this is currently not the case for conventional standalone systems, which assign network parameters in an uncoordinated, insular fashion.

In an embodiment, smooth transition is enabled from, say, pure-standalone luminaire-based sensors, which feature a ZigBee radio for late-stage configuration only, to simple connected (e.g. central override to include Automatic Demand Response (ADR) and timers); and/or from stand-alone to simple connected (e.g., one bridge for up to 200 luminaires e.g. for central overrides); and/or from stand-alone to full-fledged connected (e.g., one bridge per 50 luminaires e.g. for advanced multi-stimuli networks of sensors, UIs and wall switches).

In an embodiment, configuration device 140 comprises location unit 143 for obtaining information on the location of the first set of wireless network devices, e.g., relative to the second wireless network devices. Location information that is obtained by configuration device 140 is transmitted to configuration manager 150 over the second interface 144. Configuration manager 150 may use this information as an additional factor in selecting which stand-alone network in configuration storage 160 is a likely future merge candidate. For example, configuration manager 150 may be arranged to determine that the first set of wireless network devices and the second set of wireless network devices are placed within a same geographical area. Networks in the same area may later be part of one larger network. In this case, configuration manager 150 may determine that the first and second set of wireless network devices are placed so that they may be connected to a same gateway device.

The information on the location of the first set of wireless network devices could be anything from typing a room number into the Smart phone app, the smart phone having a (indoor) positioning system, e.g., using wireless beacons, such as Bluetooth beacons, or checking which already commissioned Zigbee nodes that can be received by the commissioning device and hence deducing which rooms are close by. In an embodiment, triangulation of multiple rooms is used for example using WiFi access points and/or 4G base stations.

The configuration device 140 may be a portable device for setting up / building a stand-alone network. Configuration device 140 may comprise a trigger signal transmitter to establish the initial connection between configuration device 140 and the wireless network device. To connect to a wireless network device a trigger signal may be transmitted to the wireless network device by the trigger signal transmitter, for example by pointing a laser pointer, to a trigger signal receiver of the wireless network device, for example to a light detector. The trigger signal may comprise one or more of a network address, and security information, PAN ID, etc. Some or all of this information may also be provided in subsequent communication between the wireless network device and configuration device 140. The initial trigger and the later communication may use different media, e.g., laser light and wireless radio communication, such as ZigBee. An example of a configuration device 140 is a smartphone with an app having an installing function. The trigger signal transmitter may be realized via a data output of the smart phone. A trigger signal transmitter and receiver may be implanted using light communication, but may also use wireless communication, say, NFC, or even ZigBee, say on a dedicated channel. Initialization of a wireless network device may involve pressing a dedicated button on the wireless network device to engage a configuration mode on the wireless network device.

For example, in smart phone configured as configuration device the audio jack of the smart phone may be coupled to a dongle with a laser pointer (or any other kind of trigger signal transmitter such as for example an infrared transmitter or a normal light transmitter, etc.) A first interface in the configuration device to the wireless devices in the first set may be formed by a ZigbeeTM radio (or any other kind of first interface to the wireless devices in the first set). A second interface to the configuration manager may be realized through the smart phone's telephone / internet function.

In an embodiment, configuration manager 150 is configured with one or more conflict avoidance rules. The rules increase or decrease the likelihood that two networks may be merged in future. For example, the configuration manager 150 may arranged to calculate the minimal number of gateways and corresponding gateway locations subject to the conflict avoidance rules so that all stand-alone network in a region may be connected to a gateway, merging stand-alone wireless networks in the region into one or more connected wireless networks.

Note that the prediction of configuration manager 150 need not be perfect. If need be, e.g., wireless network devices may be returned to factory setting and configured to be part of any network configuration that in future is deemed desirable. However, that solution is costly as it takes a lot of work from configuration personal. Moreover, some luminaries may be located at inaccessible locations, e.g., requiring a ladder. By making a reasonable prediction on which network may be merged in future, the system avoids costs at least in some of the cases-note that default ZigBee configuration will place nearby networks on different channels as much as possible. That is, default ZigBee configuration will make future merges hard by default.

Location information is an important factor to consider, since nearby networks are more likely to be merged than networks that are far away from each other.

For example, in an embodiment, the location information comprises an area reference. For example, the area reference may be a room number, or a grid number etc. The referenced area comprises the first set of wireless network devices. For example, the room number of room 110, say 110, may be transmitted to configuration manager 150. Configuration manager may retrieve area adjacency information from configuration storage 160. The area adjacency information indicates which area references are adjacent. For example, the area adjacency information may comprise that rooms 110 and 120 are adjacent, but that rooms 120 and 130 are not.

For example, a room number may be entered by the user at configuration device 140, e.g., via a configuration smartphone app, or obtained by other means of indoor location services. In commercial indoor spaces, the rooms may be labeled following a hierarchical relationship: e.g., Floor, Area, Sub-Area, Space (e.g. 1N-2.122 for Floor=1, Area=North Wing, Sub-Area=2, Space = Room 122). Optionally, the user may designate for each space a likely usage type at configuration device (e.g. meeting room, open office desk, cafeteria, phone booth, private office etc.). The location influences the likelihood of merging; for example, locations closer together are more likely to be merged. Also the likely usage type influences the likelihood of merging. For example, the smaller meeting rooms, private offices, phone booth, etc, are more likely to be merged.

Configuration manager 150 stores the first configuration parameters in storage 160, for example, to assist the configuration of yet a further stand-alone wireless network. Configuration manager 150 may also store that location information together with the first configuration parameters.

In addition or alternatively, the location information may include a network identification of the second stand-alone wireless network. In an embodiment, configuration device 140 is arranged to scan a list of allowable radio frequencies, e.g., ZigBee channels, for communication of other wireless networks. For example, configuration device 140 may be arranged to obtain a network identification of the other wireless network, e.g., a PAN id. For example, configuration device 140 may be arranged to obtain a network addresses of other wireless network devices. The networks than can be received are also candidates for merging, since apparently messages from the other network can reached until the first room. The location information may include signal strength of the messages of the other network. Configuration manager 150 may use the signal strength to decide which network is closer (higher strength is closer). For this factor to work well, configuration device 140 should be used near the location where the devices of the first set are located. Location information may also, or instead, include geographic coordinates.

In an embodiment, the second set of wireless network devices have previously been partitioned into multiple groups. Shown are group 121 comprising devices 122 and 124, and group 125 comprising devices 126 and 128. There may be more or fewer groups, etc. Groups may have more than two members. Each group has an associated group identification. Devices in the same group may be addressed together. For example, group 121 may be a group of luminaires near a whiteboard, and group 125 may be a group of luminaires near a meeting table. It is desirable that the whiteboard and table light may be dimmed individually. In an embodiment, wireless network device of a wireless network with the same group id may be addressed through the group id, e.g., using a broadcasted message.

If two networks will be merged in future it may happen that, by accident, the two networks use the same group id for a group in the respective networks. For example, if group 115 and group 121 happen to have the same group id, then after merging two unrelated sets of lights will be jointly addressable. This situation is undesirable.

Wireless devices may only have a group address, without a unique network address. For example, in an embodiment sets of lamps may have only a group address; e.g. Wireless TLED tubes in the same luminaire

If configuration manager 150 has determined two networks that may be merged in future (e.g. the first and second wireless network) then configuration manager 150 may assist in selecting group identifier for the first network as it is being configured. For example, configuration device 140 may be arranged to partition the first set of wireless network device into multiple groups, e.g., through a user interface of configuration device 140. Configuration manager 150 is arranged to associate a group identification to a group of the first set so that no group identification associated to a group of the first set is the same as a group identification associated with a network device of the second set.

For example, the group identifiers of the second wireless network may be stored in configuration storage 160, from which configuration manager 150 may retrieve them. For example, configuration manager 150 may search in configuration storage 160 through the network id of the second wireless network, say the PAN id. Also the new group identifiers for the first wireless network may be stored in storage 160.

In an embodiment, the configuration manager is arranged to obtain a set of likely gateway device locations 127. For example, the likely gateway device locations may be obtained as the location of other devices, say, WiFi access points, cable ducts, electricity plugs with uninterrupted mains, emergency exit lights etc. Alternatively, the configuration manager may compute likely gateway locations, by minimizing the number of gateway locations subject to conflict avoidance rules. For example, a first wireless network will connect poorly with a gateway and/or second wireless network if the first network is separated therefrom by an obstacle for radio waves, say an elevator shaft or fire separation, such as a fire resistant wall. However, if the configuration manager determines that first and second set of wireless network devices are spatially located to connect to the same future gateway located on one of the set of likely gateway device locations, then the configuration manager may conclude that the first and second set a spatially located to be merged in future. For example, spatially located may be proximate to one another and/or located within radio range of one another.

In an embodiment, the location of network outlets, e.g., WiFi access points, WiFi routers, and other wireless access points is used to predict likely gateway locations.

In an embodiment, conflict avoidance rules may comprise the following rule: zones that are at least pre-determined number of zones away from each other, say two zones, do not have to be able to be merged. For example, the floor plane may be divided into zones. Instead of zones, a distance may be used, say more than 50 meters.

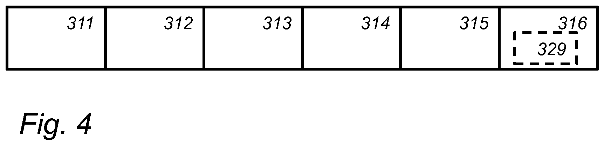

In an embodiment, the configuration manager is arranged to estimate wireless traffic relayed over a relaying wireless network device of the first and second sets to the future gateway. For example, after merging the first and second wireless network may form a mesh network in which some of the devices also relay information to and from the gateway device. If the configuration manager determines the estimated wireless traffic exceeds a wireless traffic threshold than the first and second are not spatially located to be merged into the single wireless network in future. This is illustrated in figure 4. Figure 4 schematically shows an example of an embodiment of an office plan. Shown are six offices 311-316, also shown is a likely gateway location 329. Each of the offices has a stand-alone wireless network. If all of the networks were connected to a gateway device at location 329, then one or more of the wireless devices in the wireless network of room 329 may have to relay data to and from each of the wireless devices in rooms 311-315. There is a limit to the amount of data that a wireless device may process, if the limit is reached the network will suffer, e.g., through large delays and the like. In this case, one or more of networks may have to connect to a different gateway device . For example, the amount of traffic may estimated by simulating the merged network. Alternatively, the amount of traffic may be estimated, e.g., upper bounded, by counting the number of wireless device, possibly also obtaining the device type (e.g. occupancy sensor vs wall switch) in all stand-alone networks that are to be merged and connected to the same gateway.

In an embodiment, the estimated amount of traffic also includes local traffic. A portion of the network traffic can be only locally only between the nodes; For example, exchanging daylight sensor information between neighboring luminaires. To increase accuracy this may also be counted in the total network load which includes both the local traffic and the traffic to/from the gateway.

In an embodiment, the configuration manager is arranged to determine the geographical area and/or the set of likely gateway device locations 127 based on information on related project. For example, when configuring a campus many buildings have similar layout even though they may differ in many details. By assuming the gateway locations will be the same in a new building, the configuration manager has a reasonable guess as to where the gateway locations might be in the current project. For example, in another building a merger may already has taken place. For example, the configuration manager may use -
information on lighting networks, other than the first and second wireless network, in which networks have been merged,
- information on lighting networks, other than the first and second wireless network, that have been configured in similar regions;
- a floor plan of the region in which the first and second wireless network are located, wherein optionally, the floor plan comprises information on rooms located in the region, the location of control devices in the region and/or the location of Wi-Fi routers in the region;
- information on user interfaces of the wireless network devices in the region,
- information on a heating, ventilation and air conditioning (HVAC) system in the region; and
- information on the wireless devices that are powered permanently and the nodes having switchable power.

The configuration manager may utilize information from similar buildings or floor(s) of the same building, where a more complete asset dataset of rooms, luminaires, and groupings is already available. Often the complete room structure is known from a similar building on the same campus, which has been retrofitted before with the same standalone wireless network and perhaps even with gateways; this enables for the second building to better retrieve region information about a region in which the lighting network is located.

The likely gateway locations may be derived using one (exactly one) or more of the following rules/use selectable parameters:
the number of gateways needs to be minimized;
the amount of relay traffic should be below a threshold
   the number of gateways should enable automatic fail-over (i.e. if one gateway breaks, neighboring gateways can take over its wireless nodes)
the location of gateways should be at the same location as the location of control devices
the location of gateways should be at the same location as the location of Wi-Fi routers.
permanently powered nodes should be configured as repeater nodes in a star network or critical nodes in a mesh

In an embodiment, the configuration manager is arranged to count the number of wireless devices connected to the same gateway device in the future connected wireless network, and to determine that the first and second set are not placed so that they may be connected to a same gateway device if the number of wireless devices connected to the same gateway device would exceed a threshold. The total number of devices on the same channel is to be restricted to some threshold. For example, the threshold may be set to 50, 100 or 150 devices, etc. A larger threshold may in general cause a slower and less reliable network. A higher threshold requires fewer gateways, and is thus more cost effective. If the number of devices on the combined network were to exceed the threshold, then this is a factor against merging the two networks in future. Also weighting factors based on device type may be used to determine the overall threshold.

In an embodiment, configuration manager is arranged to count the number and obtain the types of wireless devices connected to the future gateway device in the future single wireless network. The number of devices gives a quick estimate of the required bandwidth in a network, but including types makes the estimate more accurate. For example, sensors have much higher wireless traffic than luminaires and wall switches. The types of devices may hence take the mix of number and types into account. For instance, daylight sensing may be weighted by x% for traffic. The configuration manager may be arranged to determine that the first and second set are not suitable so that they may be merged if the number, optionally weighted by type, of wireless devices connected to the same future gateway device would exceed a number-of-devices threshold.

In an embodiment, configuration manager 150 computes a future merging score for multiple stand-alone networks. Configuration manager 150 comprises merging rules arranged to increase the future merging score of a stand-alone network if a condition is satisfied. Examples of merging rules have been given herein, for example, a merging rule may increase a future merging score if the stand-alone network is near, or even adjacent to a device of the first set, etc. A stand-alone network may be selected by configuration manager is the future merging score is over a given threshold, or is a maximum, etc.

In an embodiment, configuration information storage 160 comprises likely gateway device locations. For example, likely gateway device locations are central locations that are near a power source. For example, an existing location of a Wi-Fi access point is a likely gateway device location. Other likely gateway device locations may include the location of powered emergency exit signs. Emergency exit signs are often also at central locations and require a continuous source of power to light them. Moreover, the locations of emergency exit signs are often known, even for older buildings for which no digital maps are available. For example, many buildings include a map with the location of emergency exit signs. Such a map may easily be scanned and converted to digital information. Even if the quality of such a map is low, the general information regarding the emergency exits, the arrangement of the rooms, staircases, and elevators, etc., is likely sufficiently useful.

Having a list of likely gateway device locations, first and second sets of wireless devices which are close to such a likely gateway device location, say within a threshold of thereof, are placed to connect to the same gateway.

After a region, say a floor or a complete building, is done the configuration manager has more information available regarding building. The configuration manager may be arranged to check for conflicts. If there are conflicts, the system may suggest certain repair actions, e.g. put certain zones or luminaires back to factory new and newly commission by the installer. Advantageously, such a check is done when the stand alone networks are installed.

For example, the configuration manager may optimize the predicted gateway locations and the determined wireless device settings after commissioning a plurality of wireless networks based on the predicted gateway locations, determined node settings and conflict avoidance rules; and to indicate to a user via the user interface which nodes need to be re-commissioned to achieve the optimized settings. In some cases this may enable that upon upgrading the building with gateways, the only onsite installation/commissioning effort is the placement of the gateways for instance by the IT department; no need to have an onsite commissioning person to interact with the luminaries.

For example, in the situation shown in figure 1, configuration may work as follows in an embodiment. Configuration device 140 is placed by the user in room 110. Configuration device 140 then scans the radio frequencies, say ZigBee Channels, and discovers a signal from the second stand alone network. Configuration device 140 may also note the signal strength, which may be strong. Configuration device 140 may not detect a third network in room 130, or if it does, it may detect a low signal strength. A user may input a room number, say '110', for room 110 in a user interface of configuration device 140. The user may also input the expected number of wireless devices, and possibly, type of wireless device, which are to be included in room 110.. The type of wireless device may be selected from a list, say: luminaire, switch, occupancy sensor, daylight sensor. The configuration manager may be configured with weighing parameters for the various types, e.g., a occupancy sensor may be weight with a much higher factor than a wall switch. Alternatively, configuration device 110 may connect to each one of the wireless devices in room 110 and count them.

Configuration device may connect to configuration manager 150 and send thereto one or more of
- the detected network identifier(s), and possibly the associated signal strength;
- the room number 110
- the expected number of wireless devices in room 110.

Configuration manager 150 may perform the following computation. According to configuration storage 160 there are two networks nearby. For example, based on the detected network identifiers, the second and third network may be identified. For example, based on the room number, the second and third network may be identified. The configuration manager 150 may further compute that: the second network is in an adjacent room, is nearby, the total number of devices in rooms 110 and 120 is below a threshold and moreover, both networks are close to a likely gateway location (near Wi-Fi access point 127). On the other hand, the third network is less well placed. Adding these factors, e.g., by assigning a numeric value to each factor, and summing them, the second network seems the best candidate for a future merging.

Configuration manager 150 selects the same frequency information for the first network as is stored in configuration storage 160 for the second network. Configuration manager 150 further selects a first network address different from any network address used in the second network. Configuration manager 150 may select a PAN Id different from the second network; in this case two truly different stand-alone networks are obtained. Configuration manager 150 may also select the same PAN Id different from the second network; in this case the first and second stand-alone networks are defacto a single network although from the perspective of the user this may not be visible. For example, even in the latter case all groupings of luminaries appear to be independent of the other stand-alone network.

Note that Wi-Fi access point 127 is not part of the second network, as the latter is a stand-alone network. In an embodiment, the configuration storage 160 stores the radio frequencies used by the Wi-Fi infrastructure planning, the configuration manager 150 selects channels for the luminaires which avoid interference between the Wi-Fi and ZigBee channels. This is also useful for standalone wireless systems.

Configuration manager 150 transmits the network configuration information, e.g. PAN Id, Channel, etc, to configuration device 140, which uses it to configure the first device in room 140. For each next device, configuration device 140 makes a connection with the next device and receives from configuration manager 150 a network address which is not yet used in the second network. For example, configuration device 140 may send a trigger to connect to a new device.

If configuration device 140 is used to select groups, then configuration device 140 transmits to configuration manager 150 that a group is to be selected. Configuration manager 150 then selects a group identifier that is not yet used in the second network and transmits the group identifier to configuration device 140, who will then use it to create a group. For example, configuration manager 150 may retrieve the used group identifies of the second network from configuration storage 160.

The result is that the first and second networks are well placed for merging: they use the same radio frequencies, but use different identifiers groups and network address.

In an embodiment, the configuration device, and the configuration manager are distinct devices. The configuration manager is arranged to access a configuration information storage 160 arranged to store configuration parameters of further sets of wireless network devices previously configured to form further stand-alone wireless networks. For example, the configuration information storage may be comprised in the configuration manager; for example, the configuration manager may comprise an interface arranged to connect to an external configuration information storage, say a cloud based storage.

On the other hand, other combinations of the devices are also possible for example, in an embodiment the configuration manager may be comprised in the configuration device. The configuration device 140 is arranged to access a configuration information storage 160 arranged to store configuration parameters of further sets of wireless network devices previously configured to form further stand-alone wireless networks. For example, the configuration information storage may be comprised in the configuration device; for example, the configuration device may comprise an interface arranged to connect to an external configuration information storage, say a cloud based storage.

In an embodiment, the first and second sets of wireless network devices include any one of: a luminaire, a lamp, a wall switch, a remote control, a user interface device, an environmental sensor, a plug load controller, a wireless thermostat, a vending machine and an occupancy sensor. For example, the remote control may be a small switch on the table to enable office worker personal control.

Configuration device 140 may be a portable device, for example, like a remote control. Configuration device 140 may be a mobile phone configured for use as a configuration device, e.g., by downloading software, e.g., an 'app'. Configuration device 140 may be used to configure multiple stand alone networks. In this case, the configuration information storage, and the configuration manager may be comprised in configuration device 140. Alternatively, configuration information storage 160, and the configuration manager 150 may be external to configuration device 140. For example, configuration information storage 160, and the configuration manager 150 may be implemented on one or more servers accessible through a computer network, say the Internet. Configuration information storage 160 and the configuration manager 150 may or may not be combined in a single device. Configuration information storage 160 may be a server, e.g., located in the building in which the first wireless network is being configured.

The devices 140, 150 and 160 may each comprise a microprocessor (not separately shown) which executes appropriate software stored at the devices; for example, that software may have been downloaded and/or stored in a corresponding memory, e.g., a volatile memory such as RAM or a non-volatile memory such as Flash (not separately shown). The wireless devices 112-128 may also be equipped with microprocessors and memories (not separately shown). Alternatively, the devices 140 and 150 may, in whole or in part, be implemented in programmable logic, e.g., as field-programmable gate array (FPGA). Devices 140 and 150 may be implemented, in whole or in part, as a so-called application-specific integrated circuit (ASIC), i.e. an integrated circuit (IC) customized for their particular use. For example, the circuits may be implemented in CMOS, e.g., using a hardware description language such as Verilog, VHDL etc.

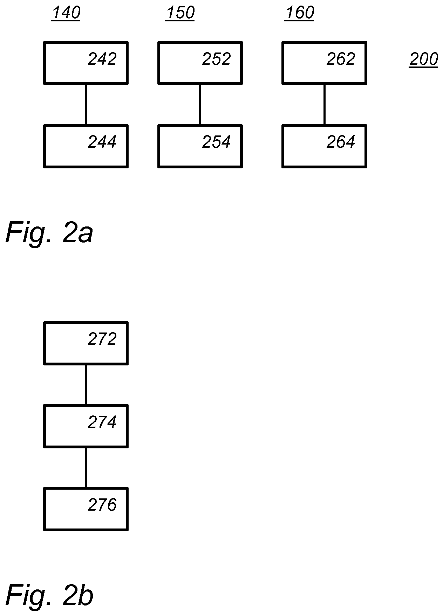

**Figure 2a** schematically shows an example of a configuration method 200. The figure shows parts of the method split for a configuration device 140, a configuration manager 150 and a configuration storage 160. Configuration method 200 is arranged for configuring a first set of wireless network devices, e.g. first set 113 to form a first stand-alone wireless network. Method 200 comprises
- storing 262 second configuration parameters of a second set of wireless network devices previously configured to form a second stand-alone wireless network.
- wirelessly connect 242 with the first set of wireless network devices
- determining 252 that the first set of wireless network devices and the second set of wireless network devices are placed so that they may be merged, e.g. connected to a same gateway device forming a future connected wireless network.
- determine 254 first configuration parameters for the first set of wireless network devices for forming the first set into a first stand-alone wireless network, wherein the first and second configuration parameters are compatible with the future connected wireless network,
- transferring 244 the first configuration parameters to the first set of wireless network devices forming the first stand-alone wireless network.
Method 200 may further comprise
- storing 264 first configuration parameters of the first set of wireless network devices previously configured to form a second stand-alone wireless network.

At some point after method 200 the first and second network may be merged and connected to a gateway device. This is illustrated in the flowchart of figure 2b, which comprises
- after configuring the first and second set of wireless network device as a first and second stand-alone network:
   - connecting 272 the first and second network to the same gateway device, and
   - reconfiguring 274 the first and second stand-alone network as a single connected network.

At this point the newly connected network may be used for
- sending 276 at least one the following command through the gateway device to first and second set of wireless connected device on the single connected network: an ADR message, a central override, a request for status information of the luminaire (e.g. on/off), a request for data (e.g. aggregated power consumption, occupancy sensor big data), etc. An ADR message (automated demand response) is a message received from outside of the central network with a request to reduce power consumption; The typical use is to send information and signals to cause electrical power-using devices to be turned off during periods of high demand. In response to the ADR message luminaires may automatically dim, and/or some, e.g., at least one, wireless network device may turn off. The ADR message may be relayed by a building management system. A central override may be used to turn off all lights, say at night or in holidays.

Many different ways of executing the method are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method.

A method according to the invention may be executed using software, which comprises instructions for causing a processor system to perform method 200. Software may only include those steps taken by a particular sub-entity of the system, e.g., the configuration device 140 or configuration manager 150. The software may be stored in a suitable storage medium, such as a hard disk, a floppy, a memory, an optical disc, etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

The configuration device 140, configuration manager 150 and configuration storage 160 may be implemented in software executed on a computer. Figure 3a shows a computer readable medium 1000 having a writable part 1010 comprising a computer program 1020, the computer program 1020 comprising instructions for causing a processor system to perform a configuration method, according to an embodiment; in particular the part of the configuration method executed by configuration device 140, configuration manager 150 and configuration storage 160. The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform said configuration method.

Figure 3b shows in a schematic representation of a processor system 1140 according to an embodiment of the configuration system, or of any one of the configuration device 140, configuration manager 150, and configuration storage 160 in particular. The processor system comprises one or more integrated circuits 1110. The architecture of the one or more integrated circuits 1110 is schematically shown in Figure 3b. Circuit 1110 comprises a processing unit 1120, e.g., a CPU, for running computer program components to execute a configuration method according to an embodiment and/or implement its modules or units; e.g. the parts corresponding to configuration device 140, configuration manager 150, and/or configuration storage 160. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of embodiments or to formulas of embodiments, thus increasing the intelligibility of the claim. These references shall not be construed as limiting the claim.

## Claims

1. A configuration system (100) arranged to configure a first set (112, 114, 116, 118, 117, 119) of wireless network devices to form a first stand-alone wireless network with regard for existing further stand-alone wireless networks, the system comprising
- a portable configuration device (140) arranged to
- connect to a configuration manager (150) and transmit a configuration request for the first set of wireless network devices, and
- wirelessly connect with the first set of wireless network devices for configuring the first set of wireless network devices to form a first stand-alone wireless network, and
- a configuration information storage (160) arranged to store configuration parameters of further sets of wireless network devices (122, 124, 126, 128) configured to form the existing further stand-alone wireless networks, the configuration parameters include the radio frequencies on which the further stand-alone wireless networks operate, and
- the configuration manager (150) arranged to
- receive the configuration request for the first set of wireless network devices from the portable configuration device (140),
- determine in the further sets of wireless network devices a second set of wireless network devices configured to form an existing second stand-alone wireless network, spatially located so that it may be merged with the first set of wireless network devices into a single wireless network in future, and obtain second configuration parameters of the second stand-alone wireless network from the configuration information storage, the second configuration parameters including the radio frequency on which the second stand-alone wireless network operates,
- determine first configuration parameters for the first set of wireless network devices for forming the first set into a first stand-alone wireless network, the first configuration parameters including the radio frequency on which the second stand-alone wireless network operates for operating the first stand-alone wireless network on the same radio frequency as the second stand-alone wireless network.

2. A configuration system as in any one of the preceding claims, wherein
- the existing second set of wireless network devices has been assigned network addresses for addressing the individual devices of the second set in the second network, and wherein
- the configuration manager is arranged to assign network addresses to devices of the first set, wherein the network addresses associated to devices of the first set are different from the network addresses assigned to network devices of the second set.

3. A configuration system as in any one of the preceding claims, wherein
- the existing second set of wireless network devices has been partitioned into multiple groups (121, 125), each group of the second set having an associated group identification, a group of the second set being addressable through the group identification on the second stand-alone network, and wherein
- the configuration device is arranged to partition the first set of wireless network device into multiple groups (111, 115), the configuration manager being arranged to associate a group identification to a group of the first set, wherein the group identifications associated to groups of the first set are different from the group identifications associated with network devices of the second set.

4. A configuration system as in any one of the preceding claims, wherein the configuration device comprises
- a location unit (143) for obtaining information on the location of the first set of wireless network devices, the configuration device being arranged to include the information on the location of the first set of wireless network devices in the configuration request,
- the configuration manager being arranged to
- determine a geographical area which is spatially located to support the future single wireless network,
- determine that the first set of wireless network devices and the second set of wireless network devices are located within the geographical area.

5. A configuration system as in Claim 4, wherein the location information comprises one or more of: an area reference comprising the first set of wireless network devices, a room-type, a room number, a network identification of the second stand-alone wireless network.

6. A configuration system as in Claim 4 or 5, wherein the configuration manager is arranged to
- obtain a set of likely gateway device locations,
- determine that first and second set of wireless network devices are spatially located to connect to the same future gateway located on one of the set of likely gateway device locations (127).

7. A configuration system as in Claim 6, wherein the configuration manager is arranged to
- estimate wireless traffic over wireless network devices of the first and second sets within the future network or to the future gateway,
- determine that the first and second stand-alone wireless network are not spatially located to be merged into the single wireless network in future if the estimated wireless traffic exceeds a wireless traffic threshold.

8. A configuration system as in Claim 6 or 7, wherein the configuration manager is arranged to count the number and/or type of wireless devices connected to the future gateway device in the future single wireless network, and to determine that the first and second set are not suitable for merging if the number, optionally weighted by type, of wireless devices connected to the same future gateway device would exceed a number-of-devices threshold.

9. A configuration system as in any one of the preceding claims, wherein configuration manager is arranged to determine the geographical area and/or the set of likely gateway device locations (127) based at least on information from a group comprising:
- information on lighting networks, other than the first and second wireless network, in which networks have been merged,
- information on lighting networks, other than the first and second wireless network, that have been configured in similar regions;
- a floor plan of the region in which the first and second wireless network are located, wherein optionally, the floor plan comprises information on rooms located in the region, the location of control devices in the region and/or the location of network outlets in the region;
- information on a heating, ventilation and air conditioning (HVAC) system in the region; and
- information on the wireless devices or router locations that are powered permanently and the nodes or router locations having switchable power.

10. A configuration system as in any one of the preceding claims, wherein the first and second sets of wireless network devices include any one of: a luminaire, a lamp, a wall switch, a remote control, a user interface device, an environmental sensor, a plug load controller, a wireless thermostat, a vending machine and an occupancy sensor.

11. A portable configuration device (140) arranged to configure a first set (112. 114, 116, 118, 117, 119) of wireless network devices to form a first stand-alone wireless network with regard for existing further stand-alone wireless networks, the portable configuration device (140) being arranged to access a configuration information storage (160) arranged to store configuration parameters of further sets of wireless network devices (122, 124, 126, 128) configured to form the existing further stand-alone wireless networks, the configuration parameters include the radio frequencies on which the further stand-alone wireless networks operate,, the portable configuration device (140) comprising
- a configuration manager (150) arranged to
- determine in the further sets of wireless network devices a second set of wireless network devices configured to form an existing second stand-alone wireless network, spatially located so that it may be merged with the first set of wireless network devices into a single wireless network in future, and obtain second configuration parameters of the second stand-alone wireless network, from the configuration information storage, the second configuration parameters including the radio frequency on which the second stand-alone wireless network operates,
- determine first configuration parameters for the first set of wireless network devices for forming the first set into a first stand-alone wireless network, the first configuration parameters including the radio frequency on which the second stand-alone wireless network operates for operating the first stand-alone wireless network on the same radio frequency as the second stand-alone wireless network, the configuration device (140) being arranged to wirelessly connect with the first set of wireless network devices for configuring the first set of wireless network devices to form a first stand-alone wireless network.

12. A configuration manager (150) arranged to configure a first set (112. 114, 116, 118, 117, 119) of wireless network devices to form a first stand-alone wireless network with regard for existing further stand-alone wireless networks, the configuration manager (150) being arranged to access a configuration information storage (160) arranged to store configuration parameters of further sets of wireless network devices (122, 124, 126, 128) configured to form the existing further stand-alone wireless networks, the configuration parameters include the radio frequencies on which the further stand-alone wireless networks operate, the configuration manager (150) being arranged to
- receive a configuration request for the first set of wireless network devices from a portable configuration device (140),
- determine in the further sets of wireless network devices a second set of wireless network devices configured to form an existing second stand-alone wireless network, spatially located so that it may be merged with the first set of wireless network devices into a single wireless network in future, and obtain second configuration parameters of the second stand-alone wireless network from the configuration information storage, the second configuration parameters including the radio frequency on which the second stand-alone wireless network operates,
- determine first configuration parameters for the first set of wireless network devices for forming the first set into a first stand-alone wireless network, the first configuration parameters including the radio frequency on which the second stand-alone wireless network operates for operating the first stand-alone wireless network on the same radio frequency as the second stand-alone wireless network.

13. A configuration method (200) for configuring a first set of wireless network devices to form a first stand-alone wireless network with regard for existing further stand-alone wireless networks, the method comprising
- connecting to a configuration manager (150) using a portable configuration device (140) and transmitting a configuration request for the first set of wireless network devices,
- wirelessly connecting with the first set of wireless network devices using the portable configuration device (140) for configuring the first set of wireless network devices to form a first stand-alone wireless network, and
- storing configuration parameters of further sets of wireless network devices (122, 124, 126, 128) configured to form existing further stand-alone wireless networks, the first configuration parameters being selected so that the first and second stand-alone wireless network operate on the same radio frequency, and
- receiving the configuration request for the first set of wireless network devices from the portable configuration device (140)
- determining in the further sets of wireless network devices a second set of wireless network devices configured to form an existing second stand-alone wireless network, spatially located so that it may be merged with the first set of wireless network devices into a single wireless network in future, and obtain second configuration parameters of the second stand-alone wireless network from the stored configuration parameters, the second configuration parameters including the radio frequency on which the second stand-alone wireless network operates,
- determining first configuration parameters for the first set of wireless network devices for forming the first set into a first stand-alone wireless network, the first configuration parameters including the radio frequency on which the second stand-alone wireless network operates for operating the first stand-alone wireless network on the same radio frequency as the second stand-alone wireless network.

14. A configuration method as in Claim 13 comprising
- after configuring the first and second set of wireless network device as a first and second stand-alone network:
- reconfiguring (274) the first and second stand-alone network as a single connected wireless network.

15. A configuration method as in Claim 14 comprising
- connecting (272) the first and second network to a same gateway device, and
- sending (276) at least one the following command through the gateway device to first and second set of wireless connected device on the single connected network: an Automatic Demand Response message, a central override, a central timer, request for usage data.

16. A computer program (1020) comprising computer program instructions arranged to perform, when the computer program is run on a computer:
- storing configuration parameters of further sets of wireless network devices (122, 124, 126, 128) configured to form existing further stand-alone wireless networks, the configuration parameters include the radio frequencies on which the further stand-alone wireless networks operate,
- receiving the configuration request for a first set of wireless network devices from the portable configuration device (140)
- determining in the further sets of wireless network devices a second set of wireless network devices configured to form an existing second stand-alone wireless network, spatially located so that it may be merged with the first set of wireless network devices into a single wireless network in future, and obtain second configuration parameters of the second stand-alone wireless network from the configuration information storage, the second configuration parameters including the radio frequency on which the second stand-alone wireless network operates,
- determining first configuration parameters for the first set of wireless network devices for forming the first set into a first stand-alone wireless network, the first configuration parameter including the radio frequency on which the second stand-alone wireless network operates for operating the first stand-alone wireless network on the same radio frequency as the second stand-alone wireless network.

17. A computer readable medium (1000) comprising the computer program (1020) as in claim 16.

## Patentansprüche

1. Konfigurationssystem (100), das so eingerichtet ist, dass es einen ersten Satz (112, 114, 116, 118, 117, 119) drahtloser Netzwerkvorrichtungen konfiguriert, um ein erstes drahtloses Stand-Alone-Netzwerk im Hinblick auf bestehende weitere drahtlose Stand-Alone-Netzwerke zu bilden, wobei das System umfasst:
- eine portable Konfigurationsvorrichtung (140), die so eingerichtet ist, dass sie
- mit einem Konfigurationsmanager (150) verbindet und eine Konfigurationsanfrage für den ersten Satz drahtloser Netzwerkvorrichtungen überträgt, und
- mit dem ersten Satz drahtloser Netzwerkvorrichtungen drahtlos verbindet, um den ersten Satz drahtloser Netzwerkvorrichtungen so zu konfigurieren, dass ein erstes drahtloses Stand-Alone-Netzwerk gebildet wird, und
- einen Konfigurationsinformationsspeicher (160), der so eingerichtet ist, dass er Konfigurationsparameter weiterer Sätze drahtloser Netzwerkvorrichtungen (122, 124, 126, 128) speichert, die so konfiguriert sind, dass sie die bestehenden weiteren drahtlosen Stand-Alone-Netzwerke bilden, wobei die Konfigurationsparameter die Hochfrequenzen enthalten, auf denen die weiteren drahtlosen Stand-Alone-Netzwerke arbeiten, sowie
- den Konfigurationsmanager (150), der so eingerichtet ist, dass er
- die Konfigurationsanforderung für den ersten Satz drahtloser Netzwerkvorrichtungen von der portablen Konfigurationsvorrichtung (140) empfängt,
- in den weiteren Sätzen drahtloser Netzwerkvorrichtungen einen zweiten Satz drahtloser Netzwerkvorrichtungen ermittelt, der so konfiguriert ist, dass er ein bestehendes zweites drahtloses Stand-Alone-Netzwerk bildet, das räumlich so positioniert ist, dass es mit dem ersten Satz drahtloser Netzwerkvorrichtungen in Zukunft zu einem einzigen drahtlosen Netzwerk zusammengeschlossen werden kann, und zweite Konfigurationsparameter des zweiten drahtlosen Stand-Alone-Netzwerks aus dem Konfigurationsinformationsspeicher erhält, wobei die zweiten Konfigurationsparameter die Funkfrequenz enthalten, auf der das zweite drahtlose Stand-Alone-Netzwerk arbeitet,
- erste Konfigurationsparameter für den ersten Satz drahtloser Netzwerkvorrichtungen ermittelt, um den ersten Satz zu einem ersten drahtlosen Stand-Alone-Netzwerk auszubilden, wobei die ersten Konfigurationsparameter die Funkfrequenz enthalten, auf der das zweite drahtlose Stand-Alone-Netzwerk arbeitet, um das erste drahtlose Stand-Alone-Netzwerk auf der gleichen Funkfrequenz wie das zweite drahtlose Stand-Alone-Netzwerk zu betreiben.

2. Konfigurationssystem nach Anspruch 1, wobei
- der bestehende zweite Satz drahtloser Netzwerkvorrichtungen Netzwerkadressen zugewiesen wurde, um die einzelnen Vorrichtungen des zweiten Satzes in dem zweiten Netzwerk zu adressieren, und wobei
- der Konfigurationsmanager so eingerichtet ist, dass er Vorrichtungen des ersten Satzes Netzwerkadressen zuweist, wobei die Vorrichtungen des ersten Satzes zugeordneten Netzwerkadressen von den Netzwerkvorrichtungen des zweiten Satzes zugewiesenen Netzwerkadressen verschieden sind.

3. Konfigurationssystem nach einem der vorangegangenen Ansprüche, wobei
- der bestehende zweite Satz drahtloser Netzwerkvorrichtungen in mehrere Gruppen (121, 125) unterteilt wurde, wobei jede Gruppe des zweiten Satzes eine zugeordnete Gruppenidentifikation aufweist, wobei eine Gruppe des zweiten Satzes durch die Gruppenidentifikation in dem zweiten Stand-Alone-Netzwerk adressierbar ist, und wobei
- die Konfigurationsvorrichtung so eingerichtet ist, dass sie den ersten Satz drahtloser Netzwerkvorrichtungen in mehrere Gruppen (111, 115) unterteilt, wobei der Konfigurationsmanager so eingerichtet ist, dass er einer Gruppe des ersten Satzes eine Gruppenidentifikation zuordnet, wobei die Gruppen des ersten Satzes zugeordneten Gruppenidentifikationen von den Netzwerkvorrichtungen des zweiten Satzes zugeordneten Gruppenidentifikationen verschieden sind.

4. Konfigurationssystem nach einem der vorangegangenen Ansprüche, wobei die Konfigurationsvorrichtung umfasst:
- eine Lokalisierungseinheit (143), um Informationen über die Position des ersten Satzes drahtloser Netzwerkvorrichtungen zu erhalten, wobei die Konfigurationsvorrichtung so eingerichtet ist, dass sie die Informationen über die Position des ersten Satzes drahtloser Netzwerkvorrichtungen in die Konfigurationsanforderung integriert,
- wobei der Konfigurationsmanager so eingerichtet ist, dass er
- einen geographischen Bereich ermittelt, der räumlich so angeordnet ist, dass er das künftige einzige drahtlose Netzwerk unterstützt,
- ermittelt, dass der erste Satz drahtloser Netzwerkvorrichtungen und der zweite Satz drahtloser Netzwerkvorrichtungen innerhalb des geographischen Bereichs angeordnet sind.

5. Konfigurationssystem nach Anspruch 4, wobei die Lokalisierungsinformationen eine oder mehrere der Folgenden umfassen: eine Bereichsreferenz mit dem ersten Satz drahtloser Netzwerkvorrichtungen, einen Raumtyp, eine Raumanzahl, eine Netzwerkidentifikation des zweiten drahtlosen Stand-Alone-Netzwerks.

6. Konfigurationssystem nach Anspruch 4 oder 5, wobei der Konfigurationsmanager so eingerichtet ist, dass er
- einen Satz wahrscheinlicher Positionen von Gatewayvorrichtungen erhält,
- ermittelt, dass der erste und zweite Satz drahtloser Netzwerkvorrichtungen räumlich so angeordnet sind, dass sie mit dem gleichen zukünftigen Gateway verbinden, das auf einer des Satzes wahrscheinlicher Positionen (127) von Gatewayvorrichtungen angeordnet ist.

7. Konfigurationssystem nach Anspruch 6, wobei der Konfigurationsmanager so eingerichtet ist, dass er
- drahtlosen Datenverkehr über drahtlose Netzwerkvorrichtungen des ersten und zweiten Satzes innerhalb des künftigen Netzwerks oder zu dem künftigen Gateway schätzt,
- ermittelt, dass das erste und zweite drahtlose Stand-Alone-Netzwerk nicht räumlich so angeordnet sind, dass sie zu dem einzigen drahtlosen Netzwerk in Zukunft zusammengeschlossen werden, wenn der geschätzte drahtlose Datenverkehr einen Schwellenwert dieses drahtlosen Datenverkehrs überschreitet.

8. Konfigurationssystem nach Anspruch 6 oder 7, wobei der Konfigurationsmanager so eingerichtet ist, dass er die Anzahl und/oder den Typ drahtloser Vorrichtungen zählt, die mit der künftigen Gatewayvorrichtung in dem künftigen einzigen drahtlosen Netzwerk verbunden sind, und ermittelt, dass der erste und zweite Satz nicht dazu geeignet sind, zusammengeschlossen zu werden, wenn die Anzahl, optional gewichtet nach Typ, von drahtlosen Vorrichtungen, die mit der gleichen zukünftigen Gatewayvorrichtung verbunden sind, einen Schwellenwert der Anzahl von Vorrichtungen überschreiten würde.

9. Konfigurationssystem nach einem der vorangegangenen Ansprüche, wobei der Konfigurationsmanager so eingerichtet ist, dass er den geographischen Bereich und/oder den Satz wahrscheinlicher Positionen (127) von Gatewayvorrichtungen aufgrund von zumindest Informationen von einer Gruppe ermittelt, die umfassen:
- Informationen über Beleuchtungsnetzwerke neben dem ersten und zweiten drahtlosen Netzwerk, in denen Netzwerke zusammengeschlossen wurden,
- Informationen über Beleuchtungsnetzwerke neben dem ersten und zweiten drahtlosen Netzwerk, die in ähnlichen Bereichen konfiguriert wurden;
- einen Grundriss des Bereichs, in dem das erste und zweite drahtlose Netzwerk angeordnet sind, wobei optional der Grundriss Informationen über Räume, die in dem Bereich angeordnet sind, die Position von Steuervorrichtungen in dem Bereich und/oder die Position von Netzwerkanschlüssen in dem Bereich umfasst;
- Informationen über ein Heiz-, Ventilations- und Klimatisierungs- (HVAC-) System in dem Bereich; sowie
- Informationen über die Positionen von drahtlosen Vorrichtungen oder Routern, die permanent gespeist werden, sowie die Positionen von Knoten oder Routern mit schaltbarer Leistung.

10. Konfigurationssystem nach einem der vorangegangenen Ansprüche, wobei der erste und zweite Satz drahtloser Netzwerkvorrichtungen eine/einen der Folgenden enthalten: eine Leuchte, eine Lampe, einen Wandschalter, eine Fernbedienung, eine Bedienoberfläche, einen Umgebungssensor, einen Steckerlastregler, ein drahtloses Thermostat, eine Vending-Machine sowie einen Belegungssensor.

11. Portable Konfigurationsvorrichtung (140), die so eingerichtet ist, dass sie einen ersten Satz (112, 114, 116, 118, 117, 119) drahtloser Netzwerkvorrichtungen konfiguriert, um ein erstes drahtloses Stand-Alone-Netzwerk im Hinblick auf bestehende weitere drahtlose Stand-Alone-Netzwerke zu bilden, wobei die portable Konfigurationsvorrichtung (140) so eingerichtet ist, dass sie zu einen Konfigurationsinformationsspeicher (160) Zugriff hat, der so eingerichtet ist, dass er Konfigurationsparameter weiterer Sätze drahtloser Netzwerkvorrichtungen (122, 124, 126, 128) speichert, die so konfiguriert sind, dass sie die bestehenden weiteren drahtlosen Stand-Alone-Netzwerke bilden, wobei die Konfigurationsparameter die Hochfrequenzen enthalten, auf denen die weiteren drahtlosen Stand-Alone-Netzwerke arbeiten, wobei die portable Konfigurationsvorrichtung (140) umfasst:
- einen Konfigurationsmanager (150), der so eingerichtet ist, dass er
- in den weiteren Sätzen drahtloser Netzwerkvorrichtungen einen zweiten Satz drahtloser Netzwerkvorrichtungen ermittelt, der so konfiguriert ist, dass er ein bestehendes zweites drahtloses Stand-Alone-Netzwerk bildet, das räumlich so positioniert ist, dass es mit dem ersten Satz drahtloser Netzwerkvorrichtungen in Zukunft zu einem einzigen drahtlosen Netzwerk zusammengeschlossen werden kann, und zweite Konfigurationsparameter des zweiten drahtlosen Stand-Alone-Netzwerks aus dem Konfigurationsinformationsspeicher erhält, wobei die zweiten Konfigurationsparameter die Funkfrequenz enthalten, auf der das zweite drahtlose Stand-Alone-Netzwerk arbeitet,
- erste Konfigurationsparameter für den ersten Satz drahtloser Netzwerkvorrichtungen ermittelt, um den ersten Satz zu einem ersten drahtlosen Stand-Alone-Netzwerk auszubilden, wobei die ersten Konfigurationsparameter die Funkfrequenz enthalten, auf der das zweite drahtlose Stand-Alone-Netzwerk arbeitet, um das erste drahtlose Stand-Alone-Netzwerk auf der gleichen Funkfrequenz wie das zweite drahtlose Stand-Alone-Netzwerk zu betreiben, wobei die Konfigurationsvorrichtung (140) so eingerichtet ist, dass sie mit dem ersten Satz drahtloser Netzwerkvorrichtungen drahtlos verbindet, um den ersten Satz drahtloser Netzwerkvorrichtungen so zu konfigurieren, dass ein erstes drahtloses Stand-Alone-Netzwerk gebildet wird.

12. Konfigurationsmanager (150), der so eingerichtet ist, dass er einen ersten Satz (112, 114, 116, 118, 117, 119) drahtloser Netzwerkvorrichtungen konfiguriert, um ein erstes drahtloses Stand-Alone-Netzwerk im Hinblick auf bestehende weitere drahtlose Stand-Alone-Netzwerke zu bilden, wobei der Konfigurationsmanager (150) so eingerichtet ist, dass er zu einen Konfigurationsinformationsspeicher (160) Zugriff hat, der so eingerichtet ist, dass er Konfigurationsparameter weiterer Sätze drahtloser Netzwerkvorrichtungen (122, 124, 126, 128) speichert, die so konfiguriert sind, dass sie die bestehenden weiteren drahtlosen Stand-Alone-Netzwerke bilden, wobei die Konfigurationsparameter die Hochfrequenzen enthalten, auf denen die weiteren drahtlosen Stand-Alone-Netzwerke arbeiten, wobei der Konfigurationsmanager (150) so eingerichtet ist, dass er
- eine Konfigurationsanforderung für den ersten Satz drahtloser Netzwerkvorrichtungen von einer portablen Konfigurationsvorrichtung (140) empfängt,
- in den weiteren Sätzen drahtloser Netzwerkvorrichtungen einen zweiten Satz drahtloser Netzwerkvorrichtungen ermittelt, der so konfiguriert ist, dass er ein bestehendes zweites drahtloses Stand-Alone-Netzwerk bildet, das räumlich so positioniert ist, dass es mit dem ersten Satz drahtloser Netzwerkvorrichtungen in Zukunft zu einem einzigen drahtlosen Netzwerk zusammengeschlossen werden kann, und zweite Konfigurationsparameter des zweiten drahtlosen Stand-Alone-Netzwerks aus dem Konfigurationsinformationsspeicher erhält, wobei die zweiten Konfigurationsparameter die Funkfrequenz enthalten, auf der das zweite drahtlose Stand-Alone-Netzwerk arbeitet,
- erste Konfigurationsparameter für den ersten Satz drahtloser Netzwerkvorrichtungen ermittelt, um den ersten Satz zu einem ersten drahtlosen Stand-Alone-Netzwerk auszubilden, wobei die ersten Konfigurationsparameter die Funkfrequenz enthalten, auf der das zweite drahtlose Stand-Alone-Netzwerk arbeitet, um das erste drahtlose Stand-Alone-Netzwerk auf der gleichen Funkfrequenz wie das zweite drahtlose Stand-Alone-Netzwerk zu betreiben.

13. Konfigurationsverfahren (200) zum Konfigurieren eines ersten Satzes drahtloser Netzwerkvorrichtungen, um ein erstes drahtloses Stand-Alone-Netzwerk im Hinblick auf bestehende weitere drahtlose Stand-Alone-Netzwerke zu bilden, wobei das Verfahren beinhaltet, dass
- mit einem Konfigurationsmanager (150) unter Verwendung einer portablen Konfigurationsvorrichtung (140) verbunden wird und eine Konfigurationsanforderung für den ersten Satz drahtloser Netzwerkvorrichtungen übertragen wird,
- mit dem ersten Satz drahtloser Netzwerkvorrichtungen unter Verwendung der portablen Konfigurationsvorrichtung (140) drahtlos verbunden wird, um den ersten Satz drahtloser Netzwerkvorrichtungen so zu konfigurieren, dass ein erstes drahtloses Stand-Alone-Netzwerk gebildet wird, und
- Konfigurationsparameter von weiteren Sätzen drahtloser Netzwerkvorrichtungen (122, 124, 126, 128) gespeichert werden, die so konfiguriert sind, dass sie bestehende weitere drahtlose Stand-Alone-Netzwerke bilden, wobei die ersten Konfigurationsparameter so ausgewählt werden, dass das erste und zweite drahtlose Stand-Alone-Netzwerk auf der gleichen Funkfrequenz arbeiten, und
- die Konfigurationsanforderung für den ersten Satz drahtloser Netzwerkvorrichtungen von der portablen Konfigurationsvorrichtung (140) empfangen wird,
- in den weiteren Sätzen drahtloser Netzwerkvorrichtungen ein zweiter Satz drahtloser Netzwerkvorrichtungen ermittelt wird, der so konfiguriert ist, dass er ein bestehendes zweites drahtloses Stand-Alone-Netzwerk bildet, das räumlich so positioniert ist, dass es mit dem ersten Satz drahtloser Netzwerkvorrichtungen in Zukunft zu einem einzigen drahtlosen Netzwerk zusammengeschlossen werden kann, und zweite Konfigurationsparameter des zweiten drahtlosen Stand-Alone-Netzwerks aus den gespeicherten Konfigurationsparametern erhalten werden, wobei die zweiten Konfigurationsparameter die Funkfrequenz enthalten, auf der das zweite drahtlose Stand-Alone-Netzwerk arbeitet,
- erste Konfigurationsparameter für den ersten Satz drahtloser Netzwerkvorrichtungen ermittelt werden, um den ersten Satz zu einem ersten drahtlosen Stand-Alone-Netzwerk auszubilden, wobei die ersten Konfigurationsparameter die Funkfrequenz enthalten, auf der das zweite drahtlose Stand-Alone-Netzwerk arbeitet, um das erste drahtlose Stand-Alone-Netzwerk auf der gleichen Funkfrequenz wie das zweite drahtlose Stand-Alone-Netzwerk zu betreiben.

14. Konfigurationsverfahren nach Anspruch 13, das beinhaltet, dass
- nach Konfigurieren des ersten und zweiten Satzes drahtloser Netzwerkvorrichtungen als ein erstes und zweites Stand-Alone-Netzwerk:
- das erste und zweite Stand-Alone-Netzwerk als ein einziges verbundenes, drahtloses Netzwerk rekonfiguriert werden (274).

15. Konfigurationsverfahren nach Anspruch 14, das beinhaltet, dass
- das erste und zweite Netzwerk mit einer gleichen Gatewayvorrichtung verbunden werden (272), und
- mindestens einer der folgenden Befehle durch die Gatewayvorrichtung zu dem ersten und zweiten Satz drahtlos verbundener Vorrichtungen in dem einzigen verbundenen Netzwerk übertragen wird (276): eine Automatic-Demand-Response-Nachricht, eine zentrale Übersteuerung, einen zentralen Timer, eine Anforderung für Nutzungsdaten.

16. Computerprogramm (1020) mit Computerprogrammanweisungen, die so eingerichtet sind, dass sie, wenn das Computerprogramm auf einem Computer abläuft, die folgenden Schritte ausführen, wonach:
- Konfigurationsparameter weiterer Sätze drahtloser Netzwerkvorrichtungen (122, 124, 126, 128) gespeichert werden, die so konfiguriert sind, dass sie bestehende weitere drahtlose Stand-Alone-Netzwerke bilden, wobei die Konfigurationsparameter die Hochfrequenzen enthalten, auf denen die weiteren drahtlosen Stand-Alone-Netzwerke arbeiten,
- die Konfigurationsanforderung für einen ersten Satz drahtloser Netzwerkvorrichtungen von der portablen Konfigurationsvorrichtung (140) empfangen wird,
- in den weiteren Sätzen drahtloser Netzwerkvorrichtungen ein zweiter Satz drahtloser Netzwerkvorrichtungen ermittelt wird, der so konfiguriert ist, dass er ein bestehendes zweites drahtloses Stand-Alone-Netzwerk bildet, das räumlich so positioniert ist, dass es mit dem ersten Satz drahtloser Netzwerkvorrichtungen in Zukunft zu einem einzigen drahtlosen Netzwerk zusammengeschlossen werden kann, und zweite Konfigurationsparameter des zweiten drahtlosen Stand-Alone-Netzwerks aus dem Konfigurationsinformationsspeicher erhalten werden, wobei die zweiten Konfigurationsparameter die Funkfrequenz enthalten, auf der das zweite drahtlose Stand-Alone-Netzwerk arbeitet,
- erste Konfigurationsparameter für den ersten Satz drahtloser Netzwerkvorrichtungen ermittelt werden, um den ersten Satz zu einem ersten drahtlosen Stand-Alone-Netzwerk auszubilden, wobei die ersten Konfigurationsparameter die Funkfrequenz enthalten, auf der das zweite drahtlose Stand-Alone-Netzwerk arbeitet, um das erste drahtlose Stand-Alone-Netzwerk auf der gleichen Funkfrequenz wie das zweite drahtlose Stand-Alone-Netzwerk zu betreiben.

17. Computerlesbares Medium (1000) mit dem Computerprogramm (1020) nach Anspruch 16.

## Revendications

1. Système de configuration (100) agencé pour configurer un premier ensemble (112, 114, 116, 118, 117, 119) de dispositifs de réseau sans fil pour former un premier réseau sans fil autonome par rapport à d'autres réseaux sans fil autonomes existants, le système comprenant
- un dispositif de configuration portable (140) agencé pour
- se connecter à un gestionnaire de configuration (150) et transmettre une demande de configuration au premier ensemble de dispositifs de réseau sans fil, et
- se connecter sans fil au premier ensemble de dispositifs de réseau sans fil pour configurer le premier ensemble de dispositifs de réseau sans fil pour former un premier réseau sans fil autonome, et
- une mémoire d'informations de configuration (160) agencée pour stocker des paramètres de configuration d'autres ensembles de dispositifs de réseau sans fil (122, 124, 126, 128) configurés pour former les autres réseaux sans fil autonomes existants, les paramètres de configuration incluent les fréquences radio sur lesquelles les autres réseaux sans fil autonomes fonctionnent, et
- le gestionnaire de configuration (150) agencé pour
- recevoir la demande de configuration pour le premier ensemble de dispositifs de réseau sans fil à partir du dispositif de configuration portable (140),
- déterminer dans les autres ensembles de dispositifs de réseau sans fil un second ensemble de dispositifs de réseau sans fil configurés pour former un second réseau sans fil autonome existant, localisé spatialement de sorte qu'il puisse fusionner avec le premier ensemble de dispositifs de réseau sans fil en un unique réseau sans fil dans le futur, et obtenir des seconds paramètres de configuration du second réseau sans fil autonome à partir de la mémoire d'informations de configuration, les seconds paramètres de configuration incluant la fréquence radio sur laquelle le second réseau sans fil autonome fonctionne,
- déterminer des premiers paramètres de configuration pour le premier ensemble de dispositifs de réseau sans fil pour former avec le premier ensemble un premier réseau sans fil autonome, les premiers paramètres de configuration incluant la fréquence radio sur laquelle le second réseau sans fil autonome fonctionne pour faire fonctionner le premier réseau sans fil autonome sur la même fréquence radio que le second réseau sans fil autonome.

2. Système de configuration selon l'une quelconque des revendications précédentes, dans lequel
- le second ensemble existant de dispositifs de réseau sans fil s'est vu attribuer des adresses de réseau permettant d'adresser les dispositifs individuels du second ensemble dans le second réseau, et dans lequel
- le gestionnaire de configuration est agencé pour attribuer des adresses de réseau à des dispositifs du premier ensemble, dans lequel les adresses de réseau associées à des dispositifs du premier ensemble sont différentes des adresses de réseau attribuées à des dispositifs de réseau du second ensemble.

3. Système de configuration selon l'une quelconque des revendications précédentes, dans lequel
- le second ensemble existant de dispositifs de réseau sans fil a été divisé en groupes multiples (121, 125), chaque groupe du second ensemble ayant une identification de groupe associée, un groupe du second ensemble étant adressable par le biais de l'identification de groupe sur le second réseau autonome, et dans lequel
- le dispositif de configuration est agencé pour diviser le premier ensemble de dispositif de réseau sans fil en groupes multiples (111, 115), le gestionnaire de configuration étant agencé pour associer une identification de groupe à un groupe du premier ensemble, dans lequel les identifications de groupe associées à des groupes du premier ensemble sont différentes des identifications de groupe associées à des dispositifs de réseau du second ensemble.

4. Système de configuration selon l'une quelconque des revendications précédentes, dans lequel le dispositif de configuration comprend
- une unité de localisation (143) permettant d'obtenir des informations sur la localisation du premier ensemble de dispositifs de réseau sans fil, le dispositif de configuration étant agencé pour inclure les informations sur la localisation du premier ensemble de dispositifs de réseau sans fil dans la demande de configuration,
- le gestionnaire de configuration étant agencé pour
- déterminer une zone géographique qui est localisée spatialement pour prendre en charge le futur unique réseau sans fil,
- déterminer que le premier ensemble de dispositifs de réseau sans fil et le second ensemble de dispositifs de réseau sans fil sont localisés dans la zone géographique.

5. Système de configuration selon la revendication 4, dans lequel les informations de localisation comprennent un ou plusieurs parmi : une référence de zone comprenant le premier ensemble de dispositifs de réseau sans fil, un type de pièce, un nombre de pièces, une identification de réseau du second réseau sans fil autonome.

6. Système de configuration selon la revendication 4 ou 5, dans lequel le gestionnaire de configuration est agencé pour
- obtenir un ensemble de localisations de dispositifs passerelles probables,
- déterminer qu'un premier et un second ensemble de dispositifs de réseau sans fil sont localisés spatialement pour se connecter à la même future passerelle localisée sur une de l'ensemble de localisations de dispositifs passerelles probables (127).

7. Système de configuration selon la revendication 6, dans lequel le gestionnaire de configuration est agencé pour
- estimer un trafic sans fil sur des dispositifs de réseau sans fil des premier et second ensembles dans le futur réseau ou vers la future passerelle,
- déterminer que le premier et le second réseau sans fil autonome ne sont pas localisés spatialement pour fusionner en l'unique réseau sans fil dans le futur si le trafic sans fil estimé dépasse un seuil de trafic sans fil.

8. Système de configuration selon la revendication 6 ou 7, dans lequel le gestionnaire de configuration est agencé pour compter le nombre et/ou le type de dispositifs sans fil connectés au futur dispositif passerelle dans le futur unique réseau sans fil, et pour déterminer que le premier et le second ensemble ne sont pas adaptés pour fusionner si le nombre, optionnellement pondéré par type, de dispositifs sans fil connectés au même futur dispositif passerelle dépasse un seuil de nombre de dispositifs.

9. Système de configuration selon l'une quelconque des revendications précédentes, dans lequel un gestionnaire de configuration est agencé pour déterminer la zone géographique et/ou l'ensemble de localisations de dispositifs passerelles probables (127) au moins sur la base d'informations provenant d'un groupe comprenant :
- des informations sur des réseaux d'éclairage, autres que le premier et le second réseau sans fil, dans lesquels des réseaux ont fusionné,
- des informations sur des réseaux d'éclairage, autres que le premier et second réseau sans fil, qui ont été configurés dans des régions similaires ;
- un plan d'étage de la région dans laquelle le premier et le second réseau sans fil sont localisés, dans lequel optionnellement, le plan d'étage comprend des informations sur des pièces localisées dans la région, la localisation de dispositifs de régulation dans la région, et/ou la localisation de sorties de réseau dans la région ;
- des informations sur un système de chauffage, ventilation et climatisation (HVAC) dans la région ; et
- des informations sur les dispositifs sans fil ou les localisations de routeurs qui sont alimentés de manière permanente et les noeuds ou les localisations de routeurs ayant une alimentation commutable.

10. Système de configuration selon l'une quelconque des revendications précédentes, dans lequel les premier et second ensembles de dispositifs de réseau sans fil incluent l'un quelconque parmi : un luminaire, une lampe, un interrupteur mural, une télécommande, un dispositif d'interface utilisateur, un capteur environnemental, un dispositif de régulation de charge de prise, un thermostat sans fil, un distributeur automatique et un capteur de présence.

11. Dispositif de configuration portable (140) agencé pour configurer un premier ensemble (112, 114, 116, 118, 117, 119) de dispositifs de réseau sans fil pour former un premier réseau sans fil autonome par rapport à d'autres réseaux sans fil autonomes existants, le dispositif de configuration portable (140) étant agencé pour accéder à une mémoire d'informations de configuration (160) agencée pour stocker des paramètres de configuration d'autres ensembles de dispositifs de réseau sans fil (122, 124, 126, 128) configurés pour former les autres réseaux sans fil autonomes existants, les paramètres de configuration incluent les fréquences radio sur lesquelles les autres réseaux sans fil autonomes fonctionnent, le dispositif de configuration portable (140) comprenant
- un gestionnaire de configuration (150) agencé pour
- déterminer dans les autres ensembles de dispositifs de réseau sans fil un second ensemble de dispositifs de réseau sans fil configurés pour former un second réseau sans fil autonome existant, localisé spatialement de sorte qu'il puisse fusionner avec le premier ensemble de dispositifs de réseau sans fil en un unique réseau sans fil dans le futur, et obtenir des seconds paramètres de configuration du second réseau sans fil autonome, à partir de la mémoire d'informations de configuration, les seconds paramètres de configuration incluant la fréquence radio sur laquelle le second réseau sans fil autonome fonctionne,
- déterminer des premiers paramètres de configuration pour le premier ensemble de dispositifs de réseau sans fil pour former avec le premier ensemble un premier réseau sans fil autonome, les premiers paramètres de configuration incluant la fréquence radio sur laquelle le second réseau sans fil autonome fonctionne pour faire fonctionner le premier réseau sans fil autonome sur la même fréquence radio que le second réseau sans fil autonome, le dispositif de configuration (140) étant agencé pour se connecter sans fil au premier ensemble de dispositifs de réseau sans fil pour configurer le premier ensemble de dispositifs de réseau sans fil pour former un premier réseau sans fil autonome.

12. Gestionnaire de configuration (150) agencé pour configurer un premier ensemble (112. 114, 116, 118, 117, 119) de dispositifs de réseau sans fil pour former un premier réseau sans fil autonome par rapport à d'autres réseaux sans fil autonomes existants, le gestionnaire de configuration (150) étant agencé pour accéder à une mémoire d'informations de configuration (160) agencée pour stocker des paramètres de configuration d'autres ensembles de dispositifs de réseau sans fil (122, 124, 126, 128) configurés pour former les autres réseaux sans fil autonomes existants, les paramètres de configuration incluent les fréquences radio sur lesquelles les autres réseaux sans fil autonomes fonctionnent, le gestionnaire de configuration (150) étant agencé pour
- recevoir une demande de configuration pour le premier ensemble de dispositifs de réseau sans fil à partir d'un dispositif de configuration portable (140),
- déterminer dans les autres ensembles de dispositifs de réseau sans fil un second ensemble de dispositifs de réseau sans fil configurés pour former un second réseau sans fil autonome existant, localisé spatialement de sorte qu'il puisse fusionner avec le premier ensemble de dispositifs de réseau sans fil en un unique réseau sans fil dans le futur, et obtenir des seconds paramètres de configuration du second réseau sans fil autonome à partir de la mémoire d'informations de configuration, les seconds paramètres de configuration incluant la fréquence radio sur laquelle le second réseau sans fil autonome fonctionne,
- déterminer des premiers paramètres de configuration pour le premier ensemble de dispositifs de réseau sans fil pour former avec le premier ensemble un premier réseau sans fil autonome, les premiers paramètres de configuration incluant la fréquence radio sur laquelle le second réseau sans fil autonome fonctionne pour faire fonctionner le premier réseau sans fil autonome sur la même fréquence radio que le second réseau sans fil autonome.

13. Procédé de configuration (200) permettant de configurer un premier ensemble de dispositifs de réseau sans fil pour former un premier réseau sans fil autonome par rapport à d'autres réseaux sans fil autonomes existants, le système comprenant
- la connexion à un gestionnaire de configuration (150) en utilisant un dispositif de configuration portable (140) et la transmission d'une demande de configuration pour le premier ensemble de dispositifs de réseau sans fil,
- la connexion sans fil avec le premier ensemble de dispositifs de réseau sans fil en utilisant le dispositif de configuration portable (140) pour configurer le premier ensemble de dispositifs de réseau sans fil pour former un premier réseau sans fil autonome, et
- le stockage de paramètres de configuration d'autres ensembles de dispositifs de réseau sans fil (122, 124, 126, 128) configurés pour former d'autres réseaux sans fil autonomes existants, les premiers paramètres de configuration étant sélectionnés de sorte que le premier et le second réseau sans fil autonome fonctionnent sur la même fréquence radio, et
- la réception de la demande de configuration pour le premier ensemble de dispositifs de réseau sans fil à partir du dispositif de configuration portable (140)
- la détermination dans les autres ensembles de dispositifs de réseau sans fil d'un second ensemble de dispositifs de réseau sans fil configurés pour former un second réseau sans fil autonome existant, localisé spatialement de sorte qu'il puisse fusionner avec le premier ensemble de dispositifs de réseau sans fil en un unique réseau sans fil dans le futur, et obtenir des seconds paramètres de configuration du second réseau sans fil autonome à partir des paramètres de configuration stockés, les seconds paramètres de configuration incluant la fréquence radio sur laquelle le second réseau sans fil autonome fonctionne,
- la détermination de premiers paramètres de configuration pour le premier ensemble de dispositifs de réseau sans fil pour former avec le premier ensemble un premier réseau sans fil autonome, les premiers paramètres de configuration incluant la fréquence radio sur laquelle le second réseau sans fil autonome fonctionne pour faire fonctionner le premier réseau sans fil autonome sur la même fréquence radio que le second réseau sans fil autonome.

14. Procédé de configuration selon la revendication 13 comprenant
- après la configuration du premier et du second ensemble de dispositif de réseau sans fil comme un premier et un second réseau autonome :
- la reconfiguration (274) du premier et du second réseau autonome comme un unique réseau sans fil connecté.

15. Procédé de configuration selon la revendication 14 comprenant
- la connexion (272) du premier et du second réseau à un même dispositif passerelle, et
- l'envoi (276) d'au moins une de la commande suivante par le biais du dispositif passerelle à un premier et un second ensemble de dispositif connecté sans fil sur l'unique réseau connecté : un message Automatic Demand Response, une annulation centrale, une horloge centrale, une demande de données d'utilisation.

16. Programme informatique (1020) comprenant des instructions de programme informatique agencées pour effectuer, lorsque le programme informatique est exécuté sur un ordinateur :
- le stockage de paramètres de configuration d'autres ensembles de dispositifs de réseau sans fil (122, 124, 126, 128) configurés pour former d'autres réseaux sans fil autonomes existants, les paramètres de configuration incluent les fréquences radio sur lesquelles les autres réseaux sans fil autonomes fonctionnent,
- la réception de la demande de configuration pour un premier ensemble de dispositifs de réseau sans fil à partir du dispositif de configuration portable (140)
- la détermination dans les autres ensembles de dispositifs de réseau sans fil d'un second ensemble de dispositifs de réseau sans fil configurés pour former un second réseau sans fil autonome existant, localisé spatialement de sorte qu'il puisse fusionner avec le premier ensemble de dispositifs de réseau sans fil en un unique réseau sans fil dans le futur, et obtenir des seconds paramètres de configuration du second réseau sans fil autonome à partir de la mémoire d'informations de configuration, les seconds paramètres de configuration incluant la fréquence radio sur laquelle le second réseau sans fil autonome fonctionne,
- la détermination de premiers paramètres de configuration pour le premier ensemble de dispositifs de réseau sans fil pour former avec le premier ensemble un premier réseau sans fil autonome, le premier paramètre de configuration incluant la fréquence radio sur laquelle le second réseau sans fil autonome fonctionne pour faire fonctionner le premier réseau sans fil autonome sur la même fréquence radio que le second réseau sans fil autonome.

17. Support lisible par ordinateur (1000) comprenant le programme informatique (1020) selon la revendication 16.
